# EUROPÄISCHE PATENTSCHRIFT

(11) **EP 1 454 068 B1**
(45) Veröffentlichungstag und Bekanntmachung des Hinweises auf die Patenterteilung: **31.08.2005**
(21) Anmeldenummer: 02785412.4
(22) Anmeldetag: 27.11.2002
(51) Int. Cl.: F16B 7/04

(54) **KNOTENVERBINDER ZUM BEFESTIGEN VON MONTAGESCHIENEN**
JOINT CONNECTOR FOR FIXING ASSEMBLY RAILS
DISPOSITIF D'ASSEMBLAGE DE JONCTION POUR FIXER DES RAILS DE MONTAGE

(30) Priorität: 13.12.2001 DE 10161190
(43) Veröffentlichungstag der Anmeldung: 08.09.2004
(73) Patentinhaber: fischerwerke Artur Fischer GmbH & Co. KG, 72178 Waldachtal (DE)
(72) Erfinder: PRANGE, Joachim, 79353 Bahlingen (DE)
(86) Internationale Anmeldenummer: PCT/EP2002/013337
(87) Internationale Veröffentlichungsnummer: WO 2003/050422

(56) Entgegenhaltungen:
- DE-A- 10 000 092
- US-A- 3 005 623
- US-A- 3 867 045
- US-A- 4 841 708

## Beschreibung

Die Erfindung betrifft einen Knotenverbinder zum Befestigen einer Montageschiene auf Stoß an einer anderen Montageschiene mit den Merkmalen des Oberbegriffs des Anspruchs 1.

Montageschienen sind an sich bekannt. Sie sind üblicherweise als Rechteckrohrprofile mit einem durchgehenden Längsschlitz auf einer Seite und vielfach einer Lochreihe auf einer gegenüberliegenden Seite ausgebildet. Die Montageschienen werden parallel zueinander und mit Abstand voneinander beispielsweise an einer Decke festgeschraubt, um auf einfache Weise quer zu den Montageschienen verlaufende Rohre, Leitungen oder dgl. an den Montageschienen und damit an der Decke befestigen zu können.

Aus der DE 100 00 092 A1 ist ein gattungsgemäßer Knotenverbinder zum Befestigen von Montageschienen bekannt. Der Knotenverbinder weist als Verbindungseinrichtung U-förmige Aufnahmen auf, in die Montageschienen einlegbar und über eine Verbindungseinrichtung auf Stoß mit anderen Montageschienen verbindbar sind. Die Verbindungseinrichtung besteht aus einem Bügel, der an den Aufnahmen angeordnete Hinterschneidungen hintergreift und über eine Schraubverbindung eine Befestigung der Montageschiene in der Aufnahme ermöglicht. Die Verlegung und Befestigung der Montageschienen mit dem bekannten Knotenverbinder erfordert zwei Monteure, da bis zur Verschraubung des Bügels der Knotenverbinder keinen Halt für die auf Stoß am Knotenverbinder anzubringende Montageschiene bietet. Ferner ist zur Befestigung eine sehr aufwendige Verbindungseinrichtung mit Hinterschneidungen an der Aufnahme und ein die Hinterschneidungen hintergreifender Bügel erforderlich.

Der Erfindung liegt die Aufgabe zugrunde, einen Knotenverbinder für derartige Montageschienen vorzuschlagen, der eine Vormontage der Montageschiene und eine einfache, von einem Monteur auszuführende Befestigung der Montageschiene ermöglicht.

Diese Aufgabe wird erfindungsgemäß durch die Merkmale des Anspruchs 1 gelöst. Der erfindungsgemäße Knotenverbinder weist als Verbindungseinrichtung ein Winkelstück mit zwei Schenkeln auf, wobei der eine Schenkel in einer Öffnung am Knotenverbinder einhängbar und der andere Schenkel des Winkelstücks an der in der Aufnahme des Knotenverbinders eingelegten Montageschiene beispielsweise durch Verschrauben befestigbar ist. Durch eine Vorbefestigung des Winkelstücks an einer Seite der Montageschiene kann diese durch Anheben des anderen Endes der Montageschiene am Knotenverbinder eingehängt und durch Absenken in der U-förmigen Aufnahme des Knotenverbinders bis zu einer waagrechten Position am Knotenverbinder durch einen Monteur angebracht werden. Das am Knotenverbinder eingehängte Winkelstück hält die Montageschiene ohne zusätzliche Halterung in dieser Position. Danach wird das andere Ende der einen Querträger bildenden Montageschiene an einen zweiten Knotenverbinder, der an einem parallel laufenden Längsträger angeordnet ist, befestigt. Da das gegenüberliegende Ende zum Einhängen nicht mehr anhebbar ist, ist an diesem Ende der Montageschiene eine Vorbefestigung des Winkelstücks nicht möglich. Zur Befestigung der Montageschiene an diesem Ende wird nur das Winkelstück in den zweiten Knotenverbinder eingehängt und danach mit der den Querträger bildenden und in der U-förmigen Aufnahme des zweiten Knotenverbinders eingelegten Montageschiene verschraubt. Der erfindungsgemäße Knotenverbinder ermöglicht eine zeitsparende und von einem Monteur ausführbare Montage und Befestigung von Montageschienen zur Erstellung eines Installationsrasters mit Längs- und Querträgern, die sowohl Querlasten als auch Zug-, Druck- und Torsionskräfte aufnehmen können. An diesen Montageschienen können nunmehr Installationen in sogenannter Aufsteck- oder abgehängten Montage angebracht werden.

Bei einer Ausgestaltung der Erfindung ist die Öffnung am Knotenverbinder als Einhängtasche ausgebildet, die beispielsweise durch einen Stanz-Biegevorgang am Knotenverbinder ausgeprägt wird. Der Öffnungsquerschnitt der Einhängtasche entspricht annähernd dem Querschnitt des einzuhängenden Schenkels des Winkelstücks, so dass eine nach allen Seiten gesicherte Verbindung nach dem Einhängen entsteht.

Zur Sicherung des Winkelstücks weist der an der Montageschiene befestigbare Schenkel ein Langloch auf, das eine Verschraubung des Schenkels mit der Montageschiene ermöglicht.

In bevorzugter Ausgestaltung der Erfindung weist der Knotenverbinder zwei Verbindungseinrichtungen an voneinander abgewandten Seiten auf, um zwei Montageschienen im Kreuzstoß an einer anderen Montageschiene befestigen zu können.

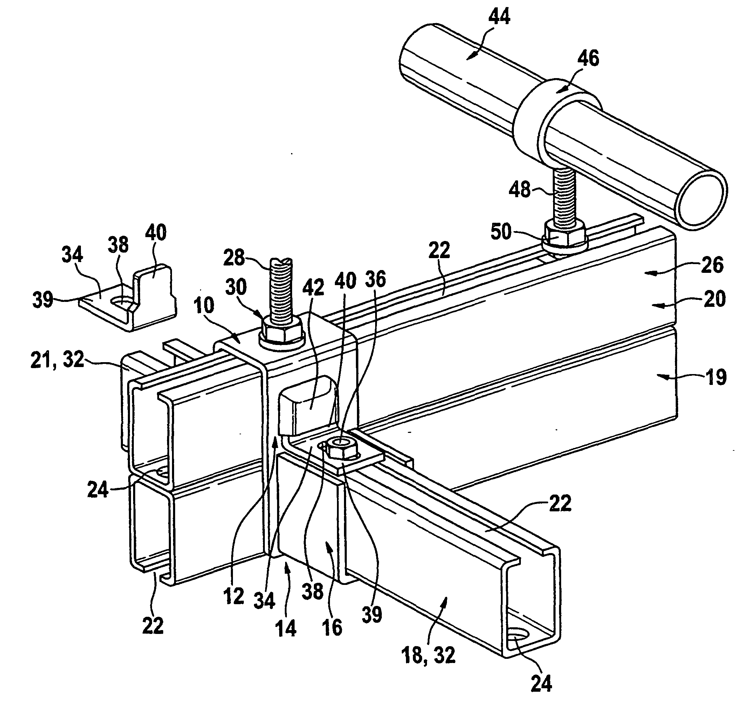

Die Erfindung wird nachfolgend anhand eines in der Zeichnung dargestellten Ausführungsbeispiels näher erläutert.

Der in der Figur dargestellte, erfindungsgemäße Knotenverbinder 10 weist ein U-förmiges Mittelteil 12 auf, an dessen beiden Schenkelwänden Verbindungseinrichtungen 14 angeordnet sind. Die Verbindungseinrichtung 14 wird durch eine rechtwinklig abstehende U-förmige Aufnahme 16 gebildet. Die Aufnahme 16 hat im dargestellten Ausführungsbeispiel etwa die halbe Höhe des Knotenverbinders 10 und ist nach oben hin offen.

Der erfindungsgemäße Knotenverbinder 10 ist zum Verbinden von im Kreuzstoß angeordneten Montageschienen 18, 19, 20, 21 vorgesehen. Die Montageschienen 18, 19, 20, 21 sind als Vierkantrohrprofile mit einem durchgehenden Längsschlitz 22 in einer und einer Lochreihe 24 in einer gegenüberliegenden Längswand versehen. Im dargestellten Ausführungsbeispiel werden zwei der Montageschienen 19, 20 als Längsträger 26 mit ihren mit den Lochreihen 24 versehenen Längswänden aneinander liegend miteinander verbunden. Die Verbindung kann beispielsweise durch Schrauben oder Nieten, ggf. auch durch Schweißen erfolgen. Durch die Verbindung der beiden Montageschienen 19, 20 erhält man einen stabilen Längsträger 26 mit Längsschlitzen 22 an Ober- und Unterseite.

Zur abgehängten Befestigung des Längsträgers 26 unter einer nicht dargestellten Decke wird ein an der Decke befestigter Abhängeanker 28 mit dem Längsträger 26 verbunden. Der Abhängeanker 28 wird dazu durch ein Loch in der Jochwand des Knotenverbinders 10 durchgesteckt. Der Abhängeanker 28 weist einen an sich bekannten Hammerkopf an seinem Ende auf, der quergestellt die mit dem Längsschlitz 22 versehene Längswand der Montageschiene 20 seitlich des Längsschlitzes 22 hintergreift. Wird der Hammerkopf um 90° verdreht in Längsrichtung der Montageschiene 20 ausgerichtet, lässt er sich durch deren Längsschlitz 22 ein- und ausführen. Auf der Außenseite der Jochwand des Knotenverbinders 10 ist eine Klemmmutter 30 auf den Abhängeanker 28 aufgeschraubt, mit der der Abhängeanker 28 in der oberen Montageschiene 20 des Längsträgers 26 festklemmbar ist. Solange die Klemmmutter 30 nicht festgezogen ist, lässt sich der Längsträger 26 bzw. der Knotenverbinder 10 in Längsrichtung des Längsträgers 26 verschieben.

Nach der abgehängten Befestigung des Längsträgers 26 werden einzelne Montageschienen 18, 21 als Querträger 32 in die U-förmigen Aufnahmen 16 des Knotenverbinders 10 eingelegt. Die Querträger 32 sind rechtwinklig auf Stoß zu den Längsträgern 26 angeordnet. Im dargestellten Ausführungsbeispiel befinden sich die Querträger 32 in einer Ebene mit der unteren Montageschiene 19 des Längsträgers 26.

Zur Sicherung des Querträgers 32 in der Aufnahme 16 des erfindungsgemäßen Knotenverbinders 10 ist an diesem ein Winkelstück 34 mittels einer Schraube 36, die durch ein Langloch 38 und dem Längsschlitz 22 der Montageschiene 18 hindurchgreift, in der Weise befestigt, dass der andere Schenkel 40 des Winkelstücks 34 rechtwinklig nach oben absteht. Durch Anheben des gegenüberliegenden Endes der Montageschiene 18 kann der nach oben stehende Schenkel 40 des Winkelstücks 34 in die nach unten offene Einhängetasche 42 angesetzt und durch Absenken der Montageschiene 18 eingehängt werden. Mit dem Einhängen wird die Montageschiene 18 in waagrechter Position gehalten und nach allen Richtungen hin gesichert. Das gegenüberliegende Ende der Montageschiene 18 wird beim Absenken gleichzeitig in die U-förmige Aufnahme eines Knotenverbinders eingelegt, der an einem im Abstand der Länge des Querträgers 32 parallel verlaufenden zweiten Längsträger (nicht dargestellt) angeordnet ist. An diesem Ende ist das Winkelstück 34 an der Montageschiene 18 nicht vormontiert, sondern wird vor der Befestigung an der Montageschiene in die Einhängelasche 42 eingehängt. Das nach dem Einhängen auf der Montageschiene lose aufliegende Winkelstück 34 wird danach mit der Schraube 36 an der Montageschiene befestigt. Nachdem beide Enden der Montageschienen über die an den Enden befestigten Winkelstücke 34 mit den Knotenverbindern 10 verbunden sind, bilden die Längsträger 26 und Querträger 32 ein steifes Gerüst, das in der Lage ist, sowohl Querlasten als auch Zug-, Druck- und Torsionskräfte aufzunehmen. An den Montageschienen 18, 19, 20, 21 können nunmehr Installationen durchgeführt werden. Im Ausführungsbeispiel ist eine Aufsteckmontage anhand eines Rohrs 44 dargestellt, das in einer Rohrschelle 46 befestigt ist. Die Rohrschelle 46 ist in an sich bekannter Weise mit einer Hammerkopfschraube 48 im Längsschlitz 22 auf der Oberseite des Längsträgers 26 befestigt und mit einer Klemmmutter 50 festgeklemmt. Bis zum Festziehen der Klemmmutter 50 lässt sich das Rohr 44 in Längsrichtung des Längsträgers 26 verschieben. Eine Aufsteckmontage ist in gleicher Weise auf den Querträgern 32 möglich (nicht dargestellt).

## Patentansprüche

1. Knotenverbinder (10) zum Befestigen einer Montageschiene (18) auf Stoß an einer anderen Montageschiene (19, 20) wobei der Knotenverbinder (10) als Verbindungseinrichtung (14) wenigstens eine Aufnahme (16) aufweist, in die die eine auf Stoß an der anderen Montageschiene (19, 20) zu befestigende Montageschiene (18) einlegbar und mit dem Knotenverbinder (10) verbindbar ist, **dadurch gekennzeichnet, dass** die Verbindungseinrichtung (14) aus einem Winkelstück (34) mit zwei Schenkeln (39, 40) besteht, wobei der eine Schenkel (40) in einer Öffnung (42) am Knotenverbinder (10) einhängbar und der andere Schenkel (39) des Winkelstücks (34) an der in der Aufnahme (16) des Knotenverbinders (10) eingelegten Montageschiene (18, 21) befestigbar ist.

2. Knotenverbinder (10) nach Anspruch 1, **dadurch gekennzeichnet, dass** die Öffnung am Knotenverbinder (10) als Einhängtasche (42) ausgebildet ist.

3. Knotenverbinder (10) nach Anspruch 1, **dadurch gekennzeichnet, dass** der Schenkel (39) des Winkelstücks (34) ein Langloch (38) aufweist und mit einer Schraube (36) an der Montageschiene (18, 21) befestigbar ist.

4. Knotenverbinder (10) nach Anspruch 1, **dadurch gekennzeichnet, dass** am Knotenverbinder (10) zwei Verbindungseinrichtungen (14) an voneinander abgewandten Seiten angeordnet sind.

## Claims

1. A connecting node (10) for fixing a mounting rail (18) in abutting relationship to another mounting rail (19, 20), the connecting node (10) comprising as connecting device (14) at least one holder (16) into which the one mounting rail (18) to be fixed to the other mounting rail (19, 20) in abutting relationship is insertable and connectible with the connecting node (10), **characterised in that** the connecting device (14) comprises an angled member (34) with two limbs (39, 40), the one limb (40) being insertable into an opening (42) on the connecting node (10) and the other limb (39) of the angled member (34) being fixable to the mounting rail (18, 21) placed in the holder (16) of the connecting node (10).

2. A connecting node (10) according to claim 1, **characterised in that** the opening on the connecting node (10) is in the form of a retaining pocket (42).

3. A connecting node (10) according to claim 1, **characterised in that** the limb (39) of the angled member (34) has a slot (38) and is fixable to the mounting rail (18, 21) with a screw (36).

4. A connecting node (10) according to claim 1, **characterised in that** two connecting devices (14) are arranged on the connecting node (10) on sides remote from one another.

## Revendications

1. Système d'assemblage à noeuds (10) pour fixer un rail de montage (18) bord à bord à un autre rail de montage (19, 20), sachant que le système d'assemblage à noeuds (10) en tant que dispositif d'assemblage (14) comprend au moins un logement (16) dans lequel peut être placé le rail de montage (18) à fixer bord à bord à l'autre rail de montage (19, 20) et assemblé au système d'assemblage à noeuds (10), **caractérisé en ce que** le dispositif d'assemblage (14) se compose d'une pièce angulaire (34) avec deux branches (39, 40), une branche (40) pouvant être accrochée dans une ouverture (42) située sur le système d'assemblage à noeuds (10) et l'autre branche (39) de la pièce angulaire (34) pouvant être fixée sur le rail de montage (18, 21) placé dans le logement (16) du système d'assemblage à noeuds (10).

2. Système d'assemblage à noeuds (10) selon la revendication 1, **caractérisé en ce que** l'ouverture sur le système d'assemblage à noeuds (10) est conçue comme poche d'accrochage (42).

3. Système d'assemblage à noeuds (10) selon la revendication 1, **caractérisé en ce que** la branche (39) de la pièce angulaire (34) comprend un trou oblong (38) et peut être fixée avec une vis (36) au rail de montage (18, 21).

4. Système d'assemblage à noeuds (10) selon la revendication 1, **caractérisé en ce que** sur le système d'assemblage à noeuds (10) sont disposés deux dispositifs d'assemblage (14) sur les faces opposées l'une à l'autre.
